# EUROPEAN PATENT APPLICATION

(11) **EP 1 847 572 A1**
(43) Date of publication of application: **24.10.2007**
(21) Application number: 06425277.8
(22) Date of filing: 21.04.2006
(51) Int. Cl.: C09D 5/02, C09D 7/00

(54) **Water based colour changing coatings and process of preparing them**

(71) Applicant: Grassellini, Roberto, 20067 Tribiano (IT)
(72) Inventor: Grassellini, Roberto, 20067 Tribiano (IT)
(74) Representative: Gislon, Gabriele

(57) **Abstract**

A water-based coating formulation comprising a pH indicator having a basic pH transition range and which is capable of changing colour with the drying of the paint, and optionally pH modifiers for adjusting the pH of the formulation to basic values and at which said indicator changes colour.

## Description

The present invention relates to a water-based coating formulation and a process for its preparation.

More particularly, the present invention relates to a formulation for white, ivory, straw-yellow and similar light-coloured coatings, *i.e.* all those colours capable of being perceptibly altered by the addition of even relatively small quantities of another colouring agent.

Water-based coatings for interiors are known and widely used. These comprise a plurality of products dispersed in water to form a paint that may be very simply applied to walls.

A problem with coatings or paints, particularly with light-coloured ones, lies in their application onto backgrounds obtained by identical or similar paints. Particularly, when a background of the same colour is coated with a white or light-coloured paint, the problem arises to make sure that the entire area for repainting has really been covered by the required quantity of paint.

Often, this problem can not be easily resolved in that the newly applied layer cannot be easily distinguished from the existing painted layer, except in conditions with optimal lighting.

The object of the invention is to solve the above mentioned problem.

This object is achieved by means of a water-based coating formulation,
characterised by comprising a pH indicator, capable of changing colour with the drying of the paint.

The invention additionally concerns a process for the preparation of a paint for the preparation of a water-based coating formulation of the above described type, characterised by adding a pH indicator to said formulation during or subsequent to its production, in order to provide the same with a colour different from that of the paint after drying.

A further object of the invention is the use of a pH indicator for the preparation of a paint formulation in accordance with that described above, in order to provide the same with a temporary colour.

According to a preferred aspect of the invention, the pH of the formulation is comprised of between 7.0 and 10.5.

According to another aspect of the invention, the basic pH of the paint will be achieved by pH modifiers. Preferably, one or more of said modifiers are volatile, namely, capable of evaporating along with the paint solvents during the drying stage of the same.

Preferably, the pH indicator is coloured at basic pH values and transparent following transition. Preferred indicators are the phthaleins, and more preferably the phenolphthalein.

According to a further preferred aspect of the invention, the paint formulation comprises a drying retardant, such as for example polypropylene or polyethylene glycol, in sufficient quantities to keep the paint wet (and thus coloured) during the entire time of application onto the background to be covered. Thereby, a homogeneous application of the paint is ensured onto the background.

It is a particularly advantageous aspect of the formulation according to the invention that no substantial modifications to the normally used formulations are required, except for any potential increases in the pH of the formulation. This pH increase is achieved by means of solid pH modifiers which evaporate with the solvent. Suitable modifiers are NaOH, carbonate, slaked lime, lime putty, ammonia and aminomethyl propanol (AMP). Preferred modifiers are NaOH, slaked lime and AMP.

The indicator used will undergo a colour transition by passing from the basic pH solution either already existing in the water-based paint or specifically raised to this value, to the dried paint.

Preferably, the paint composition according to the invention further comprises one or more drying retardants, *i.e.* compounds capable of delaying the drying and film formation of the paint, within a range comprised of between 0.08 and 3.5% of the total formulation weight. Thereby, the colour of the pH indicator remains more visible, and the easiness of the application results improved.

Typically, the formulation according to the invention comprises the following composition:

**Table 1.**

| | | | |
|---|---|---|---|
| cellulose thickener | from 0.1 | to 3 | % w/w |
| preservative | from 0.05 | to 1.5 | % w/w |
| antifoaming agent | from 0.05 | to 2 | % w/w |
| ethylene glycol | from 0.2 | to 2 | % w/w |
| diethylene glycol | from 0.2 | to 2 | % w/w |
| polypropylene (or polyethylene) glycol | from 0.1 | to 2.8 | % w/w |
| polymer dispersant | from 0.1 | to 3 | % w/w |
| wetting agent | from 0.01 | to 3 | % w/w |
| coalescent | from 0,1 | to 3 | % w/w |
| vinyl resin | from 1 | to 30 | % w/w |
| calcium carbonate | from 5 | to 80 | % w/w |
| titanium dioxide | from 0.1 | to 30 | % w/w |
| water | to | 100 % w/w | |

Besides the mentioned vinyl and aryl resins, also other filmogenic resins suitable for use in the formulation of the invention may be used, such as for example:
arylic styrol, vinyl maleate, polyurethane and vinyl-versatate.

Generally, the compounds used for the formulations according to the invention must be stable at the pH used.

Generally, one or more pH modifiers are added to said formulation in order to adjust it to such a value to allow the indicator to be coloured. The quantity of pH modifiers is comprised within the range from 0.05 to 3% by weight of the total formulation.

Preferred pH modifiers are selected from:
soda, ammonia, slaked lime, aminomethylpropanol, lime putty and alkaline silicates.

To such a formulation is also added a pH indicator selected from those known in the art, in function of the final paint colour.

The quantity of the pH indicator used is that which is sufficient to impart a visible colour to the paint in aqueous form, without perceptibly influencing the colour of the dried paint itself. Generally, the quantity of the pH indicator is comprised within the range from 0.01 to 2% of the total formulation weight.

The following table summarises the indicators most often used and suited to the use described herein.

**Table 2.**

| name | acidic form colour | basic form colour | transition pH |
|---|---|---|---|
| phenol red | yellow | red | 6.4-8.0 |
| cresol red | yellow | red | 7.2-8.8 |
| I-naphtholphthalein | pink | green | 7.3-8.7 |
| thymol blue | yellow | blue | 8.0-9.6 |
| phenolphthalein | colourless | bluish red | 8.0-9.9 |
| thymolphthalein | colourless | blue | 9.3-10.5 |

As mentioned above, the preferred indicators are those that are normally colourless, *i.e.* phenolphthalein and thymolphthalein; the phenolphthalein is preferred as it has a transition pH lower than that of thymolphthalein.

In a preferred embodiment of the invention, the basic pH of the paint is achieved by means of a combination of several pH modifiers, at least one of which is capable of evaporating along with the water of the dispersion, so as to achieve the desired pH for transition upon drying.

The invention will now be described in greater detail with reference to the following examples for illustrative and non limitative purpose.

### Example 1. Preparation of a white paint.

A white base paint, having the following formulation, is prepared:

| | | |
|---|---|---|
| cellulose thickener | 1.5 | % w/w |
| preservative | 1.0 | % w/w |
| antifoaming agent | 0.2 | % w/w |
| ethylene glycol | 0.3 | % w/w |
| diethylene glycol | 0.3 | % w/w |
| polymer dispersant | 0.1 | % w/w |
| wetting agent | 0.1 | % w/w |
| coalescent | 0.1 | % w/w |
| vinyl resin | 7.0 | % w/w |
| calcium carbonate | 60.0 | % w/w |
| titanium dioxide | 8.0 | % w/w |
| water | to 100 | % w/w |

The pH of the paint is equal to approx. 8.5.

To the basic formulation thus obtained is added 0.8% by weight of the final formulation, of a drying retardant, for example propylene glycol, and from 0.05 to 3.0% parts by weight (with respect to the total of the final formulation) of pH modifiers in order to adjust the pH to a value of at least 9.0. Then, 0.2 parts by weight (as a percentage of the total weight of the final formulation) of phenolphthalein are added, in order to give a pink coloured product.

### Example 2. Application of the paint of example 1.

The paint of example 1 is applied using a roller, brush or spray to a wall provided already with a layer of dried paint. The paint according to the invention may obviously be applied both to new backgrounds and to paints of any already existing colour.

The layer of paint according to the present invention, when applied to the support, appears distinct with respect to that already present, thanks to the pink colouring. This allows to apply an uniform layer of the new paint.

Following drying, the colour is uniform and white.

### Example 3. Comparison between formulations.

A support, as from the preceding example, is divided into two separate and adjacent areas, to which the formulation according to the invention and the identical formulation, however without pH indicator, are respectively applied.

The pink colour is perfectly perceptible and allows to distinguish the two paints when wet.

Following drying, the two paints are indistinguishable and it is not possible to determine the point of overlap between them.

Thus, the formulation according to the invention presents the advantage of making the area, where a new layer of paint is applied, easily identifiable, even if the application is tone to tone or colour to colour. Even if the preferred application described is that of a white paint, it is possible to apply the same principle also to other paint colours, particularly to the pale colours, by appropriately selecting the most suitable pH indicator for the application.

## Claims

1. A water-based coating formulation, **characterised by** comprising a pH indicator capable of changing colour with the drying of the paint.

2. The formulation according to claim 1, wherein said formulation comprises pH modifiers for adjusting the pH of the formulation to basic values and wherein said indicator has a transition range with a basic pH value.

3. The formulation according to claim 2, wherein the amount of said indicator is comprised within the range from 0.01 to 3.0% by weight of the total formulation.

4. The formulation according to one of the previous claims, wherein said indicator is selected from phenolphthalein and thymolphthalein.

5. The formulation according to one of the previous claims, wherein one or more of said pH modifiers evaporates along with the volatile components of the formulation.

6. The formulation according to one of the claims from 3 to 5, wherein said pH modifiers are selected from NaOH, ammonia, slaked lime, lime putty and aminomethylpropanol.

7. The formulation according to one of the previous claims, further comprising one or more drying retardants.

8. A process for the preparation of a water-based coating formulation according to one of the previous claims, **characterised by** adding a pH indicator to said formulation, during or subsequent to its production, in order to provide the same with a colour different from that of the paint after drying.

9. The process according to claim 8, wherein the pH of the paint is basic.

10. Use of a pH indicator for the preparation of a paint formulation according to one of the claims from 1 to 5.
